Europäisches Patentamt

**European Patent Office**

**Office européen des brevets**

(11) Veröffentlichungsnummer: **0 100 325**
**B1**

(12) **EUROPÄISCHE PATENTSCHRIFT**

(45) Veröffentlichungstag der Patentschrift:
**01.04.87**

(51) Int. Cl.⁴: **B 01 D 11/02,** A 23 F 5/26

(21) Anmeldenummer: **83900341.5**

(22) Anmeldetag: **18.01.83**

(86) Internationale Anmeldenummer:
**PCT/EP 83/00011**

(87) Internationale Veröffentlichungsnummer:
**WO 83/02570 (04.08.83** Gazette 83/18)

(54) **EXTRAKTIONSVERFAHREN UND VORRICHTUNG ZU DESSEN DURCHFÜHRUNG.**

(30) Priorität: **30.01.82 DE 3203100**

(43) Veröffentlichungstag der Anmeldung:
**15.02.84 Patentblatt 84/7**

(45) Bekanntmachung des Hinweises auf die Patenterteilung:
**01.04.87 Patentblatt 87/14**

(84) Benannte Vertragsstaaten:
**AT BE CH DE FR GB LI LU NL SE**

(56) Entgegenhaltungen:
**WO - A - 82/02149**
**DE - A - 2 332 839**
**DE - C - 817 336**
**GB - A - 1 367 508**
**US - A - 3 164 474**

(73) Patentinhaber: **MITTEX AKTIENGESELLSCHAFT,
Aeulestrasse 5, FL-9490 Vaduz (LI)**

(72) Erfinder: **HUSSMANN, Peter, Via dei Pucci 4,
I-50100 Florenz (IT)**

(74) Vertreter: **Haug, Dietmar et al, Patentanwälte Andrae,
Flach, Haug Steinstrasse 44, D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Extraktionsverfahren, bei dem in einer Haupt-extraktionsphase Extraktivstoffe aus einem feinstgemahlenen Extraktionsgut mit Extraktlösungen unterschiedlicher Konzentration nach dem Gegenstromprinzip bei geringer Temperatur in einem Flachbettfilterextraktor extrahiert werden.

Ein solches Verfahren ist in unserem älteren europäischen Patent Nr. 0 073 807 (Prioritätsdatum: 16. 03. 82; Anmeldedatum: 11. 03. 82; Veröffentlichungsdatum: 30. 09. 82) beschrieben. Bei dem dort beschriebenen Verfahren wird das Extraktionsgut vor der Extraktion zunächst in einer Walzenmühle grob zerkleinert und dann in einer Kugelmühle unter Zusatz der jeweiligen, bei einem vorausgegangenen Extraktionszyklus entstandenen Extraktlösung höchster Konzentration nass feinstgemahlen, wobei die Korngrösse nach der Feinstvermahlung 5 bis 50 µm beträgt. Die Extraktion wird bei einer Verfahrenstemperatur von 15° bis 30 °C durchgeführt. Die bei der Extraktion angereicherten Extraktlösungen werden von dem Extraktionsgut jeweils durch Absaugen über ein Filtermedium wieder getrennt. Hierbei lässt sich nicht vermeiden, dass in dem Extraktionsgut enthaltene leicht flüchtige Extraktivstoffe, wie z.B. Aromastoffe, mit abgesaugt werden und somit nicht in Lösung gehen können. Ein solcher Verlust von Aromastoffen sollte bei der Gewinnung hochprozentiger, aromareicher Extrakte, wie z.B. Kaffee-Extrakte, möglichst vermieden werden.

Die Aufgabe der Erfindung besteht darin, das gattungsgemässe Extraktionsverfahren so auszubilden, dass ein Verlust von leicht flüchtigen Extraktivstoffen, insbesondere Aromastoffen, vermieden wird und gleichzeitig eine höhere Ausbeute an Extraktivstoffen erzielt wird.

Die Aufgabe der Erfindung wird dadurch gelöst, dass

a. das in der Hauptextraktionsphase verwendete Extraktionsgut zuvor in einer Sekundärextraktionsphase durch Extraktion mit einer Extraktionsflüssigkeit teilweise ausgelaugt worden ist,

b. das in der Sekundärextraktionsphase verwendete Extraktionsgut zuvor grob in 1 bis 4 mm grosse Teilchen zerkleinert worden ist,

c. das bei der Sekundärextraktionsphase teilweise ausgelaugte Extraktionsgut vor seiner Verwendung in der Hauptextraktionsphase mit der jeweiligen Extraktlösung höchster Konzentration nass feinstvermahlen wird, die sich dabei weiter anreichert, wobei die Korngrösse nach der Feinstvermahlung 5 bis 50 µm beträgt,

d. die bei der Nassmahlung weiter angereicherte Extraktlösung nach ihrer Abtrennung vom feinstgemahlenen Extraktionsgut als Extraktionsflüssigkeit in der Sekundärextraktionsphase verwendet wird, wobei sie sich noch weiter anreichert, und

e. sowohl die Hauptextraktionsphase als auch die Sekundärextraktionsphase bei einer im Bereich von 8 °C bis Raumtemperatur liegenden Verfahrenstemperatur durchgeführt wird.

Bevor also die Lösung höchster Konzentration aus der Hauptextraktionsphase zur Weiterverarbeitung, insbesondere Konzentration und Entfeuchtung, abgeführt wird, findet ein weiterer Extraktionsvorgang statt, wobei die Lösung nochmals angereichert wird. Da das Extraktionsgut lediglich grob zerkleinert ist, wird die Trennung der angereicherten Extraktlösung von dem Extraktionsgut erheblich erleichtert, so dass auch die leicht flüchtigen Extraktivstoffe, insbesondere Aromastoffe, in die Extraktlösung gehen und mit ihr abgeführt werden können. Ausserdem wirkt sich die relativ niedrige Verfahrenstemperatur bei der Sekundärextraktionsphase wie auch bei der Hauptextraktionsphase aromaschonend aus.

Die Sekundärextraktionsphase kann auf verschiedene Art und Weise durchgeführt werden. Eine Variante besteht darin, dass nach dem Gegenstromprinzip gearbeitet wird, indem die weiter anzureichernde Lösung durch mehrere verschieden stark ausgelaugte Chargen des zuvor grob zerkleinerten Extraktionsgutes geleitet wird, wobei angefangen wird mit der am stärksten ausgelaugten Charge und geendet wird mit der am wenigsten ausgelaugten Charge bzw. der frisch eingebrachten Charge. Eine andere Variante dieser Extraktionsphase besteht darin, dass die weiter anzureichernde Lösung nur durch eine einzige Charge des grob zerkleinerten Extraktionsgutes geleitet wird, bevor sie zur Weiterverarbeitung abgeführt wird. In jedem Fall muss das Extraktionsgut für die Sekundärextraktionsphase in 1 bis 4 mm, vorzugsweise 2 bis 3 mm, grosse Teilchen zuvor zerkleinert worden sein. Bei einer solchen Teilchengrösse lässt sich die Extraktionsflüssigkeit mühelos durch das Extraktionsgut pumpen, oder man kann sie sogar selbsttätig von dem Extraktionsgut über ein Filtermedium ablaufen lassen. In jedem Fall wird besonders aromaschonend extrahiert.

Der bei der Sekundärextraktionsphase entstandene Extraktionsrückstand, der ja nur insoweit ausgelaugt ist, als die Lösung höchster Konzentration aus der Hauptextraktionsphase noch weiter angereichert werden konnte, wird nach dieser Phase feinstgemahlen, um bei der Hauptextraktionsphase eingesetzt zu werden. Erfindungsgemäss wird die Feinstmahlung des Extraktionsrückstandes unter Zusatz einer Extraktlösung höchster Konzentration aus der Hauptextraktionsphase durchgeführt, die anschliessend von ihm wieder getrennt und bei der Sekundärextraktionsphase als Extraktionsflüssigkeit eingesetzt wird. Vorzugsweise wird die Feinstmahlung in einer Kugelmühle durchgeführt, da in dieser Mühle das Extraktionsgut zur nachfolgenden Absonderung der Extraktivstoffe am stärksten aufgeschlossen wird. Die Grobzerkleinerung des Extraktionsgutes kann hingegen in einer Walzenmühle erfolgen.

Zur Gewinnung einer möglichst hohen Ausbeute an Trockenextrakten hat sich bei Kaffee als Extraktionsgut ein Verhältnis des Extraktionsrückstandes zu der Extraktlösung höchster Konzentration in der Kugelmühle von 1:4 bis 1:10, vorzugsweise 1:7 bis 1:8, als zweckmässig erwiesen. Die durch die Feinstmahlung erhaltene Extraktionsmasse mit einer Korngrösse von 5 bis 50 µ wird in der Hauptextraktionsphase in einem Flachbettfilterextraktor extrahiert, wobei die Schichthöhe der Extraktionsmasse nur gering ist und z.B. 50 bis 100 mm beträgt. Bei der Sekundärextraktionsphase kann hingegen mit wesentlich höheren Schichten gearbeitet werden, da durch die wesentlich grössere Teilchengrösse des Extraktionsgutes der Ablauf der Extraktlösung von dem Extraktionsrückstand vergleichsweise schneller vonstatten geht, als bei der Hauptextraktion. Bei der Sekundärextraktionsphase kann die Schichthöhe der Extraktionsmasse z.B. 400 bis 1000 mm betragen. Es können sogar noch grössere Schichthöhen gewählt werden, wobei jedoch zu beachten ist, dass mit zunehmender Schichthöhe die Gefahr der Nestbildung in der Extraktionsmasse zunimmt, wodurch die Ausbeute natürlich beeinträchtigt wird. In jedem Fall sollte die Schichthöhe bei der Sekundärextraktionsphase unter der bei der herkömmlichen Säulenextraktion üblichen Höhe bleiben. Während bei der Sekundärextraktionsphase insbesondere die Aromastoffe extrahiert werden, um dadurch einen möglichst aromareichen Extrakt zu erhalten, soll bei der Hauptextraktion der überwiegende Anteil der übrigen Extraktivstoffe extrahiert werden, um eine möglichst hohe Ausbeute zu erzielen. Es hat sich nun bei Versuchen gezeigt, dass die mit der Hauptextraktion erhaltene Ausbeute weiter gesteigert werden kann, indem der Hauptextraktion eine Schlussextraktion nachgeschaltet wird, in der unter erhöhten Temperaturbedingungen gearbeitet wird. Bei dieser Schlussextraktion werden restliche Extraktivstoffe aus der Extraktionsmasse mit Extraktlösungen relativ geringer Konzentration im Gegenstromprinzip nach vorausgehender Erhitzung der Extraktionsmasse stufenweise extrahiert. Es genügt eine einmalige Erhitzung der Extraktionsmasse. Vorzugsweise wird die Extraktionsmasse mit einer Extraktlösung auf 60° bis 90 °C erhitzt. Eine weitere Temperaturerhöhung wäre natürlich möglich, jedoch wird die durch die weitere Temperaturerhöhung erzielte Ausbeutesteigerung im Verhältnis zu dem hierzu erforderlichen Energieaufwand immer unbedeutender.

Anstelle einer Erhitzung der Extraktionsmasse vorzunehmen, kann man sie auch eine Weile in einem Reaktionsbehälter, ggf. unter Überlagerung eines Schutzgases, stehen lassen, um weitere Extraktivstoffe löslich zu machen. Die Standzeit sollte etwa 24 bis 72 h betragen.

Wie bereits schon angedeutet, wird das erfindungsgemässe Extraktionsverfahren zur Gewinnung aromareicher Extrakte aus aromastoffhaltigen natürlichen Stoffen bevorzugt eingesetzt. Seine Vorteile kommen jedoch insbesondere dann zum Tragen, wenn es zur Gewinnung von Kaffee-Extrakten betrieben wird, die nach einer ggf. vorzunehmenden Konzentration und Dehydratation zu sofort löslichen Grundsubstanzen für einen Kaffeeaufguss verarbeitet werden.

Es hat sich gezeigt, dass bei Kaffee mit dem erfindungsgemässen Verfahren Ausbeuten von über 50% Trockensubstanzgehalt erhältlich sind.

Die Erfindung betrifft auch eine Vorrichtung zur Durchführung des Verfahrens. Diese Vorrichtung weist einen oder mehrere Flachbettfilterextraktoren und mehrere untereinander mit dem oder den Extraktoren verschaltete Extraktlösungsbehälter auf und ist insbesondere dadurch gekennzeichnet, dass mindestens ein Säulenextraktor für die Sekundärextraktionsphase vorgesehen ist, der mit den Extraktlösungsbehältern und unter Zwischenschaltung einer Kugelmühle mit dem oder den Flachbettfilterextraktoren verbunden ist, und der Säulenextraktor ein säulenförmiges Gehäuse und einen Filterboden an seinem unteren Ende aufweist.

Weitere Einzelheiten der Vorrichtung sowie des Verfahrens ergeben sich aus der nachfolgenden Beschreibung eines Ausführungsbeispiels der Erfindung, wobei auf das beiliegende Blockschaltbild Bezug genommen ist.

Eine Extraktionsvorrichtung zur Gewinnung von flüssigem Kaffeextrakt in hochkonzentrierter Form besteht im wesentlichen aus einer Anzahl von miteinander verschalteten Extraktionssäulen 1 für die Sekundärextraktionsphase, einem oder mehreren Flachbettfilterextraktoren 2 für die Hauptextraktion und die Schlussextraktion, sowie einer ersten Anzahl von miteinander verschalteten Extraktlösungsbehältern 3 zur Aufnahme der Extraktlösungen für die Hauptextraktion und einer zweiten Anzahl von miteinander verschalteten Behältern 4 zur Aufnahme der relativ niedrig konzentrierten Extraktlösungen für die Schlussextraktion. Die Extraktionssäulen 1 sind über Leitungen 5 mit den Extraktlösungsbehältern 3 für die Hauptextraktion verbunden. Ferner sind die Extraktionssäulen 1 über eine Leitung 6 mit einer Kugelmühle 7 für den Austrag des Extraktionsrückstandes in die Kugelmühle 7 verbunden. Die Kugelmühle 7 ist über eine erste Leitung 8 mit den Extraktlösungsbehältern 3 für die Zufuhr der jeweiligen Extraktlösung zur Nassvermahlung des Extraktionsrückstandes und über eine Leitung 9 mit dem Flachbettfilterextraktor 2 für den Transport der vermahlenen Extraktionsmasse in den Flachbettfilterextraktor 2 verbunden. Eine Verbindungsleitung 10 führt von dem Flachbettfilterextraktor 2 über einen Abscheider 11 zu einem Rührbehälter 12, in welchem die aus dem Extraktor 2 ausgetragene Extraktionsmasse mit der jeweiligen Extraktlösung aus den Behältern 4 für die Schlussextraktion verrührt wird. Eine Leitung 13 für den Transport der in dem Behälter 12 entstandenen Mischung aus Extraktionsmasse und Extraktlösung führt vom Rührbehälter 12 über einen Wärmetauscher 14 zurück in den Extraktor 2. Für die Zufuhr von Extraktlösungen aus den Behältern 4 in den Rührbehälter 12 sind die Behälter 4 über eine Leitung 15 unter Zwischenschaltung des Wärmetauschers 14 und eines mit Dampf betriebenen Erhitzers 16 mit dem Rührbehälter 12 verbunden. Für die Rückführung der jeweils in dem Extraktor 2 angereicherten Lösung in den entsprechenden Extraktlösungsbehälter sind die Extraktlösungsbehälter 3 und die Extraktlösungsbehälter 4 über ein Leitungssystem 17 mit dem Extraktor verbunden. Eine Leitung 5A führt von den Extraktionssäulen 1 zu einem Behälter 3A der Batterie von Behältern 3 und von dort weiter über einen Separator 18 zu einer nicht dargestellten Dehydratationsanlage und dient zum Abtransport der bei der Sekundärextraktion weiter mit Extraktivstoffen, insbesondere Aromastoffen, angereicherten Extraktlösung zur Weiterverarbeitung. Sowohl die Behälter 3 als auch die Behälter 4 sind jeweils mit einem Leitungssystem 19 bzw. 20 für die Zu- und Abfuhr von einem Schutzgas, wie z.B. Kohlendioxyd oder Stickstoff, verbunden. Den Extraktionssäulen 1 sind eine Walzenmühle 21 für die Grobzerkleinerung des Kaffees und eine Röstanlage 22 vorgeschaltet. Der Austrag des vollständig ausgelaugten Extraktionsrückstandes aus dem Flachbettfilterextraktor 2 erfolgt über ein Abflussrohr 23. Von der Leitung 10 zweigt ein Leitungsast 24 ab, über den die Extraktionsmasse zwischen den einzelnen Stufen der Extraktion der Kugelmühle für eine Zwischenvermahlung zugeführt werden kann.

Die Vorrichtung weist ausserdem nicht näher bezeichnete Ventile und Pumpen auf, mit denen die Extraktlösungen und die Extraktionsmasse entsprechend des erfindungsgemässen Verfahrensablaufes in der Vorrichtung bewegt werden.

Der Verfahrensablauf ist im wesentlichen der folgende. Die bei der Hauptextraktion gewonnene Extraktlösung höchster Konzentration wird nach ihrer Trennung im Flachbettfilterextraktor zur weiteren Anreicherung mit Extraktivstoffen, insbesondere Aromastoffen, in der Sekundärextraktionsphase nach dem Gegenstromprinzip durch die Extraktionssäulen 1 geleitet, die mit unterschiedlich stark ausgelaugtem, grob gemahlenem Kaffee gefüllt sind. Die Durchströmung der Extraktionssäulen 1 erfolgt in der Weise, dass die Extraktionssäulen in der Reihenfolge des Auslaugungsgrades der in ihnen enthaltenen Extraktionsgutchargen durchströmt werden, wobei angefangen wird mit der Extraktionssäule, die den am stärksten ausgelaugten Kaffee enthält und geendet wird mit der Extraktionssäule, die den frisch eingefüllten Kaffee enthält. Sobald die am stärksten ausgelaugte Extraktionsgutcharge nicht noch weiter ausgelaugt werden kann, d.h. wenn ihr Trockensubstanzgehalt demjenigen entspricht, den die aus der Hauptextraktion kommende Extraktlösung hat, wird diese Charge abgeführt und der Kugelmühle 7 zugeleitet. Die entleerte Extraktionssäule wird dann mit frisch gemahlenem Kaffee gefüllt und es folgt dann eine Umschaltung der Extraktionssäulen 1 in der Weise, dass die mit frischem Kaffee gefüllte Extraktionssäule nunmehr zuletzt von der nächstfolgenden Extraktlösung durchströmt wird, während die in der vorausgegangenen Stufe zuletzt durchströmte Extraktionssäule in der Reihenfolge der Durchströmung an die zweitletzte Stelle rückt. Die in der vorausgegangenen Stufe an vorletzter Stelle durchströmte Extraktionssäule 1 wird in der nachfolgenden Stufe an drittletzter Stelle bzw. zweiter Stelle durchströmt und die in der vorausgegangenen Stufe an zweiter Stelle durchströmte Extraktionssäule rückt in der Reihenfolge der Durchströmung an die erste Stelle. Die Reihenfolge der Durchströmung der Extraktionssäulen 1 ändert sich sukzessiv, während der Sekundärextraktion. Erfindungsgemäss wird in der Sekundärextraktionsphase wie auch in der Hauptextraktionsphase unter normalen Temperaturbedingungen gearbeitet, d.h. etwa in einem Bereich von 8 °C bis Raumtemperatur oder geringfügig darüber.

Es hat sich in Versuchen gezeigt, dass eine Extraktlösung mit einem Trockensubstanzgehalt von 10 bis 20% in der Sekundärextraktionsphase auf 25 bis 40% Trockensubstanzgehalt angereichert wird, wobei zu berücksichtigen ist, dass die Grösse der Zunahme des Trockensubstanzgehaltes in der Sekundärextraktionsphase von der Zahl der Extraktionssäulen und der Schichthöhe des Extraktionsgutes in den einzelnen Säulen abhängig ist. Im Blockschaltbild sind vier Extraktionssäulen dargestellt, es können jedoch auch mehr oder weniger Extraktionssäulen verwendet werden. Die Grösse der Zunahme des Trockensubstanzgehaltes in der Sekundärextraktionsphase ist auch von der Kaffeeprovenienz und der Röstung abhängig.

Im allgemeinen kann man rechnen, dass z.B. bei einer 50%-igen Ausbeute 20 bis 30% in der Sekundärextraktionsphase in Lösung gebracht werden.

Wie bereits angedeutet, wird jeweils diejenige Extraktionssäule entleert, in der der Trockensubstanzgehalt demjenigen der zugeführten Extraktlösung entspricht. Wenn also die von der Hauptextraktionsphase zugeführte Extraktlösung einen Trockensubstanzgehalt von 15% hat, findet eine Entleerung der an erster Stelle durchströmten Extraktionssäule statt, wenn der Trockensubstanzgehalt, der aus dieser Extraktionssäule abgeführten Lösung identisch ist mit der eintretenden Lösung.

Die in der Sekundärextraktionsphase weiter angereicherte Extraktlösung wird nach ihrem Austritt aus der letzten Extraktionssäule 1 zur Weiterverarbeitung abgeführt, während der in die Kugelmühle 7 eingebrachte Extraktionsrückstand mit nunmehr derjenigen Lösung aus der Hauptextraktion feinstvermahlen wird, die die höchste Konzentration hat. Diese Lösung kann dazu verwendet werden, den Extraktionsrückstand aus der entsprechenden Extraktionssäule auszuwaschen und in die Kugelmühle 7 zu fördern. Das Verhältnis des Extraktionsrückstandes zu der Lösung, mit der er vermahlen wird, soll etwa 1:7, 1:8 sein. Die in der Kugelmühle 7 feinstvermahlene Extraktionsmasse wird dann dem Flachbettfilterextraktor 2 zugeführt und dort extrahiert. Die dabei entstehende Lösung ist die Extraktionsflüssigkeit für die Sekundärextraktionsphase. Der sich anschliessende Extraktionsvorgang verläuft nach dem Gegenstromprinzip. Die in den Behältern 3 befindlichen Lösungen werden nacheinander der Extraktionsmasse im Flachbettfilterextraktor 2 zugeführt und wieder von ihr getrennt, wobei jeweils angefangen wird mit der Lösung höchster Konzentration und geendet wird mit der Lösung niedrigster Konzentration. In jeder Stufe des Extraktionsverfahrens findet eine Anreicherung der jeweiligen Lösung auf einen Konzentrationswert statt, den die Lösung in der vorhergehenden Stufe hatte. Die Trennung der einzelnen Lösungen von der Extraktionsmasse in der Hauptextraktion wird durch Absaugen über einen Filterboden aus einem feinstmaschigen Gewebe bewirkt. Da die leicht flüchtigen Aromastoffe in der Sekundärextraktionsphase der Extraktlösung zugeführt werden, können durch das Absaugen der Extraktlösungen in der Hauptextraktion keine Aromastoffe mehr verlorengehen. Der Zweck der Hauptextraktion kann daher in erster Linie in der Erzielung einer hohen Ausbeute gesehen werden, während die Sekundärextraktion primär zur Aromaerhaltung dient. Die Hauptextraktion erfolgt ebenfalls ohne Wärmezufuhr.

In der Hauptextraktion wird die Lösung niedrigster Konzentration auf etwa 1 bis 2,5% Trockensubstanzgehalt angereichert. Danach schliesst sich eine Schlussextraktion an, die wie folgt abläuft. Die weitgehend ausgelaugte Extraktionsmasse wird aus dem Flachbettfilterextraktor 2 in den Rührbehälter 12 geführt und wird dort mit der auf 60 bis 90° erhitzten Lösung höchster Konzentration aus der Behälterbatterie 4 vermischt. Das Feststoff-Flüssigkeitsverhältnis soll hierbei 1:3 bis 1:8, vorzugsweise 1:7, betragen. Es hat sich in Versuchen gezeigt, dass durch die Erhitzung und das Verrühren der Extraktionsmasse weitere Extraktivstoffe in Lösung gehen, die bei der vorausgehenden Hauptextraktion noch unlöslich waren. Die Mischung wird aus dem Rührbehälter 12 über den Wärmetauscher 14, in dem eine Abkühlung der Mischung erfolgt, in den Extraktor 2 zurückgeführt, in dem nun eine Lösung mit einer erhöhten Konzentration von der Extraktionsmasse getrennt wird. Diese Lösung wird ihrem Konzentrationsgehalt entsprechend in einen Behälter der Behälterbatterie 3 eingeführt.

Der weitere Verlauf der Schlussextraktion erfolgt ebenfalls nach dem Gegenstromprinzip, d.h. es wird die immer stärker ausgelaugte Extraktionsmasse mit schwächer werdenden Extraktlösungen der Behälterbatterie 4 extrahiert, wobei zwischen jeder Stufe des Extraktionsverfahrens ein Verrühren der Extraktionsmasse mit der jeweiligen Extraktlösung stattfindet. Eine nochmalige Erhitzung der Extraktionsmasse ist hingegen nicht notwendig.

Am Ende der Schlussextraktion wird frisches Lösungsmittel zugegeben, um die nach der Sekundärextraktion abgeführte Lösungsmenge zu ersetzen. Die Menge des Lösungsmittels wird derart bemessen, dass wieder ein Feststoff-Flüssigkeitsverhältnis von 1:7 bis 1:8 zustande kommt. Es könnte jedoch genauso gut wie in allen vorhergehenden Extraktionsphasen mit einem Verhältnis von 1:5 bis 1:6 gearbeitet werden.

Da die Extraktionsmasse erst ganz am Schluss des gesamten Extraktionsverfahrens erhitzt wird, besteht keine Gefahr mehr, dass die temperaturempfindlichen Aromastoffe des Kaffees zerstört werden können, da diese bereits in der Sekundärextraktion weitgehend extrahiert und von der Extaktlösung aufgenommen worden sind. Da auch in der Hauptextraktion ohne Temperaturerhöhung gearbeitet wird, wirkt sich diese Phase des Extraktionsverfahrens ebenfalls schonend auf die nach der Sekundärextraktion in der Extraktionsmasse ggf. noch enthaltenen Aromastoffe aus.

Dem kontinuierlichen, eben beschriebenen Extraktionsverfahren geht ein einmaliger Vorschaltprozess zur Anreicherung der Extraktlösungen auf die gewünschte Konzentration voraus. Dieser Vorschaltprozess verläuft im wesentlichen wie das nachfolgende kontinuierliche Verfahren, jedoch mit dem Unterschied, dass die jeweils höchstkonzentrierte Extraktlösung nicht zur Weiterverarbeitung abgeführt wird, sondern so lange weiter angereichert wird, bis sie die gewünschte Konzentration erhalten hat. In entsprechender Weise werden die niedriger konzentrierten Lösungen stufenweise angereichert. Im übrigen ist ein vergleichbarer Vorschaltprozess in unserem eingangsgenannten Patent beschrieben.

Das erfindungsgemässe Verfahren könnte mit gleichem Erfolg zur Extraktion aromareicher Extraktivstoffe aus anderen aromareichen Stoffen als Kaffee angewendet werden, wie z. B. Tee, Heilpflanzen bzw. -kräuter, Fleisch, Fisch, Hopfen etc.. Selbst die Extraktion schwer extrahierbarer Stoffe wie Pektine, lässt sich erfolgreich mit dem erfindungsgemässen Verfahren und der Extraktionsvorrichtung durchführen.

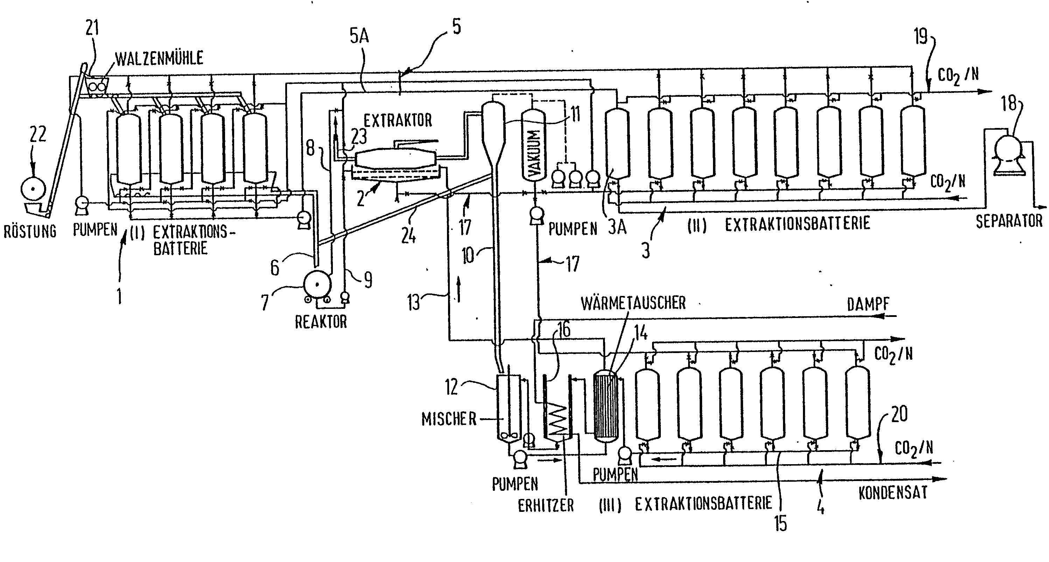

**Patentansprüche**

1. Extraktionsverfahren, bei dem in einer Hauptextraktionsphase Extraktivstoffe aus einem feinstgemahlenen Extraktionsgut mit Extraktlösungen unterschiedlicher Konzentration nach dem Gegenstromprinzip bei geringer Temperatur in einem Flachbettfilterextraktor extrahiert werden, wobei

a. das in der Hauptextraktionsphase verwendete Extraktionsgut zuvor in einer Sekundärextraktionsphase durch Extraktion mit einer Extraktionsflüssigkeit teilweise ausgelaugt worden ist,

b. das in der Sekundärextraktionsphase verwendete Extraktionsgut zuvor grob in 1 bis 4 mm grosse Teilchen zerkleinert worden ist,

c. das bei der Sekundärextraktionsphase teilweise ausgelaugte Extraktionsgut vor seiner Verwendung in der Hauptextraktionsphase mit der jeweiligen Extraktlösung höchster Konzentration nass feinstvermahlen wird, die sich dabei weiter anreichert, wobei die Korngrösse nach der Feinstvermahlung 5 bis 50 µm beträgt,

d. die bei der Nassmahlung weiter angereicherte Extraktlösung nach ihrer Abtrennung vom feinstgemahlenen Extraktionsgut als Extraktionsflüssigkeit in der Sekundärextraktionsphase verwendet wird, wobei sie sich noch weiter anreichert, und

e. sowohl die Hauptextraktionsphase als auch die Sekundärextraktionsphase bei einer im Bereich von 8 °C bis Raumtemperatur liegenden Verfahrenstemperatur durchgeführt wird.

2. Extraktionsverfahren nach Anspruch 1, dadurch gekennzeichnet, dass in der Sekundärextraktionsphase nach dem Gegenstromprinzip extrahiert wird, indem die weiter anzureichernde Lösung durch mehrere, verschieden stark ausgelaugte Chargen des Extraktionsgutes geleitet wird, wobei angefangen wird mit der am stärksten ausgelaugten Charge und geendet wird mit der frisch zugeführten Charge.

3. Extraktionsverfahren nach einem der vorhergehenden Ansprüche, dadurch gekennzeichnet, dass die Nassvermahlung des bei der Sekundärextraktionsphase teilweise ausgelaugten Extraktionsgutes in einer Kugelmühle durchgeführt wird.

4. Extraktionsverfahren nach einem der vorhergehenden Ansprüche, dadurch gekennzeichnet, dass die Grobzerkleinerung des Extraktionsgutes in einer Walzenmühle durchgeführt wird.

5. Extraktionsverfahren nach einem der vorhergehenden Ansprüche, dadurch gekennzeichnet, dass das bei der Sekundärextraktionsphase teilweise ausgelaugte Extraktionsgut und die jeweilige Extraktlösung höchster Konzentration bei der Nassvermahlung ein im Bereich von 1:4 bis 1:10 liegendes Mischungsverhältnis haben.

6. Extraktionsverfahren nach einem der vorhergehenden Ansprüche, dadurch gekennzeichnet, dass in der Sekundärextraktionsphase die Extraktion mit höheren Schichten des Extraktionsgutes als in der Hauptextraktionsphase durchgeführt wird.

7. Extraktionsverfahren nach einem der vorhergehenden Ansprüche, dadurch gekennzeichnet, dass in einer Schlussextraktionsphase restliche Extraktivstoffe aus dem Extraktionsgut mit Extraktlösungen geringer Konzentration nach dem Gegenstromprinzip nach vorausgehender Erhitzung oder nach einer Standzeit des Extraktionsgutes stufenweise in dem Flachbettfilterextraktor extrahiert werden.

8. Extraktionsverfahren nach Anspruch 7, dadurch gekennzeichnet, dass zwischen jeder Extraktionsstufe das Extraktionsgut mit der jeweiligen Extraktlösung verrührt wird.

9. Extraktionsverfahren nach Anspruch 7 oder 8, dadurch gekennzeichnet, dass das Extraktionsgut mit einer Extraktlösung aus der Schlussextraktionsphase auf 60° bis 90 °C erhitzt wird.

10. Extraktionsverfahren nach einem der Ansprüche 7 bis 9, dadurch gekennzeichnet, dass das Extraktionsgut vor der Schlussextraktionsphase in einem Reaktionsbehälter 24 bis 72 h stehen gelassen wird.

11. Anwendung des Extraktionsverfahrens nach einem der vorhergehenden Ansprüche zur Gewinnung aromareicher Extrakte aus aromastoffhaltigen natürlichen Stoffen.

12. Anwendung des Extraktionsverfahrens nach einem der Ansprüche 1 bis 10 zur Gewinnung von hochprozentigen Kaffee-Extrakten.

13. Vorrichtung zur Durchführung des Verfahrens nach einem der vorhergehenden Ansprüche, mit einem oder mehreren Flachbettfilterextraktoren (2) und mehreren untereinander und mit dem bzw. den Flachbettfilterextraktoren (2) verschalteten Extraktlösungsbehältern (3, 4), dadurch gekennzeichnet, dass mindestens ein Säulenextraktor (1) für die Sekundärextraktionsphase vorgesehen ist, der mit den Extraktlösungsbehältern (3, 4) und unter Zwischenschaltung einer Kugelmühle (7) mit dem oder den Flachbettfilterextraktoren verbunden ist, und der Säulenextraktor (1) ein säulenförmiges Gehäuse und einen Filterboden an seinem unteren Ende aufweist.

14. Vorrichtung nach Anspruch 13, dadurch gekennzeichnet, dass eine weitere Anzahl von untereinander verschalteten Extraktlösungsbehältern (4) für die Schlussextraktionsphase vorgesehen ist, die mit dem oder den Flachbettfilterextraktoren (2) unter Zwischenschaltung eines Erhitzers (16) und mit den übrigen Extraktlösungsbehältern (3) verbunden sind.

15. Vorrichtung nach Anspruch 14, dadurch gekennzeichnet, dass der oder jeder Flachbettfilterextraktor (2) über eine Vorlaufleitung (10) und eine Rücklaufleitung (13) mit einem Rührbehälter (12) verbunden ist, in dem eine Durchmischung des Extraktionsgutes mit der jeweiligen Extraktlösung stattfindet, dass in der Rücklaufleitung (13) ein Wärmetauscher (14) vorgesehen ist, und dass der Rührbehälter (12) mit den Extraktlösungsbehältern (4) für die Schlussextraktionsphase über eine Zulaufleitung (15) für die jeweilige Extraktlösung verbunden ist, in welcher der Erhitzer (16) und der Wärmetauscher (14) zwischengeschaltet sind.

## Claims

1. Extraction method in which in a main extraction phase extractive substances are extracted from an extremely finely ground extraction material with extract solutions of different concentration by the counter-flow principle at low temperature in a flat bed filter extractor, wherein

a. the extraction material used in the main extraction phase has previously been partially leached out in a secondary extraction phase by extraction with an extraction liquid,

b. the extraction material used in the secondary extraction phase has previously been comminuted coarsely to particles 1 to 4 mm in size,

c. the extraction material partially leached out in the secondary extraction phase is extremely finely wet ground prior to its use in the main extraction phase with the respective extract solution of highest concentration which is thereby further concentrated, the grain size after the fine grinding being 5 to 50 μm,

d. the extract solution further concentrated in the wet grinding is used after separation thereof from the finely ground extraction material as extraction liquid in the secondary extraction phase, thereby being still further concentrated, and

e. both the main extraction phase and the secondary extraction phase are carried out at a process temperature lying in the range of 8 °C to room temperature.

2. Extraction method according to claim 1, characterized in that in the secondary extraction phase the counter-flow principle is used for the extraction in that the solution to be further concentrated is conducted through charges of the extraction material which have been leached out to different extents, starting with the most leached out charge and ending with the freshly supplied charge.

3. Extraction method according to any one of the preceding claims, characterized in that the wet grinding of the extraction material partially leached out in the secondary extraction phase is carried out in a ball mill.

4. Extraction method according to any one of the preceding claims, characterized in that the coarse comminution of the extraction material is carried out in a roller mill.

5. Extraction method according to any one of the preceding claims, characterized in that the extraction material partially leached out in the secondary extraction phase and the respective extract solution of highest concentration in the wet grinding have a mixing ratio lying in the range of 1:4 to 1:10.

6. Extraction method according to any one of the preceding claims, characterized in that in the secondary extraction phase the extraction is carried out with higher layers of the extraction material than in the main extraction phase.

7. Extraction method according to any one of the preceding claims, characterized in that in a final extraction phase residual extractive substances are extracted stepwise in the flat bed filter extractor from the extraction material with extract solutions of low concentration by the counter-flow principle after previous heating or after allowing the extraction material to stand for a time.

8. Extraction method according to claim 7, characterized in that between each extraction stage the extraction material is stirred with the respective extract solution.

9. Extraction method according to claim 7 or 8, characterized in that the extraction material is heated with an extract solution from the final extraction phase to 60° to 90 °C.

10. Extraction method according to any one of claims 7 to 9, characterized in that the extraction material is allowed to stand before the final extraction phase in a reaction container for 24 to 72 h.

11. Use of the extraction method according to any one of the preceding claims for recovering aroma-rich extracts from aromatic natural substances.

12. Use of the extraction method according to any one of claims 1 to 10 for recovering high-percentage coffee extracts.

13. Apparatus for carrying out the method according to any one of the preceding claims comprising one or more flat bed filter extractors (2) and a plurality of extract solution containers (3, 4) connected to each other and to the flat bed filter extractor or extractors (2), characterized in that at least column extractor (1) is provided for the secondary extraction phase and is connected to the extract solution containers (3, 4) and with interposition of a ball mill (7) to the flat bed filter extractor or extractors, and the column extractor (1) comprises a column-shaped housing and a filter bottom at its lower end.

14. Apparatus according to claim 13, characterized in that a further number of extract solution containers (4) connected to each other is provided for the final extraction phase and said containers are connected to the flat bed filter extractor or extractors (2) with interposition of a heater (16) and to the other extract solution containers (3).

15. Apparatus according to claim 14, characterized in that the or each flat bed filter extractor (2) is connected via a forward line (10) and a return line (13) to an agitating container (12) in which mixing of the extraction material with the respective extract solution takes place, that in the return line (13) a heat exchanger (14) is provided and that the agitating container (12) is connected to the extract solution containers (4) for the final extraction phase via a feed line (15) for the respective extract solution in which the heater (16) and the heat exchanger (14) are interposed.

**Revendications**

1. Procédé d'extraction, dans lequel, dans une phase d'extraction principale, des substances extractibles sont extraites d'une substance soumise à l'extraction très finement moulue par des solutions d'extrait à différentes concentrations selon le principe de contre-courant, à température peu élevée, dans un extracteur à filtre à lit plat, caractérisé en ce que:

a. la substance soumise à l'extraction utilisée dans la phase d'extraction principale a été auparavant lessivée partiellement dans une phase d'extraction secondaire par extraction par un liquide d'extraction,

b. la substance soumise à l'extraction utilisée dans la phase d'extraction secondaire a été auparavant moulue grossièrement en particules de 1 à 4 mm de grosseur,

c. la substance soumise à l'extraction partiellement lessivée dans la phase d'extraction secondaire est moulue très finement à l'état humide, avant d'être utilisée dans la phase d'extraction principale, avec la solution d'extrait respective à concentration la plus élevée qui s'enrichit encore dans cette phase, la grosseur des grains après la mouture très fine étant de 5 à 50 microns.

d. la solution d'extrait encore enrichie au cours de la mouture à l'état humide est, après sa séparation de la substance soumise à l'extraction très finement moulue, utilisée comme liquide d'extraction dans la phase d'extraction secondaire, dans laquelle elle s'enrichit encore, et

e. tant la phase d'extraction principale que la phase d'extraction secondaire se déroulent à une température de traitement comprise dans l'intervalle de 8 °C à la température ambiante.

2. Procédé d'extraction selon la revendication 1, caractérisé en ce que, dans la phase d'extraction secondaire, l'extraction est effectuée selon le principe de contre-courant en faisant passer la solution à enrichir dans plusieurs charges, lessivées à différents degrés, de la substance soumise à l'extraction, en commençant par la charge la plus fortement lessivée et en finissant par la charge fraîchement amenée.

3. Procédé d'extraction selon l'une des revendications précédentes, caractérisé en ce que la mouture à l'état humide de la substance soumise à l'extraction partiellement lessivée dans la phase d'extraction secondaire est exécutée dans un broyeur à boulets.

4. Procédé d'extraction selon l'une des revendications précédentes, caractérisé en ce que la mouture grossière de la substance soumise à l'extraction est exécutée dans un broyeur à cylindres.

5. Procédé d'extraction selon l'une des revendications précédentes, caractérisé en ce que la substance soumise à l'extraction partiellement lessivée dans la phase d'extraction secondaire et la solution d'extrait respective à concentration la plus élevée dans la mouture à l'état humide ont un rapport de mélange compris dans l'intervalle de 1:4 à 1:10.

6. Procédé d'extraction selon l'une des revendications précédentes, caractérisé en ce que, dans la phase d'extraction secondaire, l'extraction est exécutée avec des couches de substance soumise à l'extraction plus épaisses que dans la phase d'extraction principale.

7. Procédé d'extraction selon l'une des revendications précédentes, caractérisé en ce que, dans une phase d'extraction finale, des substances extractibles résiduelles sont extraites par paliers, dans l'extracteur à filtre à lit plat, de la substance soumise à l'extraction par des solutions d'extrait à faible concentration selon le principe de contre-courant après chauffage ou après un temps de séjour de la substance soumise à l'extraction.

8. Procédé d'extraction selon la revendication 7, caractérisé en ce qu'entre les paliers d'extraction successifs, la substance soumise à l'extraction est mélangée avec la solution d'extrait respective.

9. Procédé d'extraction selon la revendication 7 ou 8, caractérisé en ce que la substance à l'extraction est chauffée à 60 à 90°C avec une solution d'extrait provenant de la phase d'extraction finale.

10. Procédé d'extraction selon l'une des revendications 7 à 9, caractérisé en ce que la substance soumise à l'extraction est laissée reposer dans un récipient à réaction pendant 24 à 72 heures avant la phase d'extraction finale.

11. Application du procédé selon l'une des revendications précédentes à l'obtention d'extraits riches en arôme de substances naturelles contenant des substances aromatiques.

12. Application du procédé d'extraction selon l'une des revendications 1 à 10 à l'obtention d'extraits de café fortement concentrés.

13. Dispositif pour la mise en œuvre du procédé selon l'une des revendications précédentes, avec un ou plusieurs extracteurs à filtre à lit plat (2) et plusieurs récipients à solution d'extrait (3, 4) raccordés entre eux et à l'extracteur à filtre à lit plat (2) ou aux extracteurs (2), caractérisé en ce qu'au moins un extracteur à colonne (1) pour la phase d'extraction secondaire est prévu et raccordé aux récipients à solution d'extrait (3, 4) et, par l'intermédiaire d'un broyeur à boulets (7), à l'extracteur à filtre à lit plat (2) ou aux extracteurs (2), et que l'extracteur à colonne (1) comporte un corps en forme de colonne et un fond filtrant à son extrémité inférieure.

14. Dispositif selon la revendication 13, caractérisé en ce que plusieurs autres récipients à solution d'extrait (4) raccordés entre eux pour la phase d'extraction finale sont prévus et raccordés à l'extracteur à filtre à lit plat (2) ou aux extracteurs (2) par l'intermédiaire d'un réchauffeur (16) et aux autres récipients à solution d'extrait (3).

13. Dispositif selon la revendication 14, caractérisé en ce que l'extracteur à filtre à lit plat (2) ou chaque extracteur (2) est raccordé par une conduite d'amenée (10) et une conduite de retour (13) à un récipient mélangeur (12) dans lequel la substance soumise à l'extraction est mélangée avec la solution d'extrait respective; qu'un échangeur de chaleur (14) est prévu dans la conduite de retour (13); et que le récipient mélangeur (12) est raccordé aux récipients à solution d'extrait (4) pour la phase d'extraction finale par une conduite d'amenée (15) pour la solution d'extrait respective, dans laquelle le réchauffeur (16) et l'échangeur de chaleur (14) sont insérés.

WALZENMÜHLE

EXTRAKTOR

5A    5

11

VAKUUM

19

$CO_2/N$

18

$CO_2/N$

23

8

2

24

17

PUMPEN    3A

(II) EXTRAKTIONSBATTERIE

SEPARATOR

0 100 325

21

22

RÖSTUNG    PUMPEN    (I) EXTRAKTIONS-
BATTERIE

1

6

7    REAKTOR    9

13    10

17

WÄRMETAUSCHER

DAMPF

16    14

$CO_2/N$

12

MISCHER

20

$CO_2/N$

PUMPEN    PUMPEN

ERHITZER    (III) EXTRAKTIONSBATTERIE

15

4

KONDENSAT

3